# EUROPÄISCHE PATENTSCHRIFT

(11) **EP 2 025 581 B1**
(45) Veröffentlichungstag und Bekanntmachung des Hinweises auf die Patenterteilung: **27.04.2011**
(21) Anmeldenummer: 08009888.2
(22) Anmeldetag: 30.05.2008
(51) Int. Cl.: B62D 25/08, B62D 25/20, B62D 27/02

(54) **Fahrzeugaufbau für insbesondere Kühlfahrzeuge**
Vehicle superstructure, particularly for refrigerated vehicles
Construction automobile pour véhicule réfrigérant en particulier

(30) Priorität: 13.08.2007 DE 102007038093
(43) Veröffentlichungstag der Anmeldung: 18.02.2009
(73) Patentinhaber: Fahrzeugwerk Bernard Krone GmbH, 48480 Spelle (DE)
(72) Erfinder: Krone, Bernard, 22605 Hamburg (DE); Stegemann, Ralf, 48429 Rheine (DE); Sasse, Uwe, 49716 Meppen (DE); Möhlenkamp, Wilhelm, 49757 Werlte (DE); Nordhoff, Frank, 27612 Loxstedt (DE)
(74) Vertreter: Pott, Ulrich

(56) Entgegenhaltungen:
- EP-A- 0 547 346
- EP-A- 1 057 718
- WO-A-03/013941
- DE-C1- 19 905 650
- GB-A- 2 313 578
- US-A- 5 466 033

## Beschreibung

Die Erfindung bezieht sich auf einen Fahrzeugaufbau für insbesondere Kühlfahrzeuge mit einer an einem Fahrzeugchassis festlegbaren Aufbauboden, der eine Trägerplatte und Trägerbalken umfaßt, an denen ein Laderaumboden abstütztbar ist, wobei der Trägerbalken in Bereichen, in denen er mit dem Fahrzeugchassis verbunden ist, eine vorzugsweise metallische, in den Trägerbalken eingelassene Verstärkung aufweist.

Ein solcher Fahrzeugaufbau ist aus der DE 199 05 650 C1 bekannt. Dabei ist der Trägerbalken für den Bodenaufbau eines Lastfahrzeuges im Querschnitt im wesentlichen rechteckig und aus Sperrholz mit vertikal verlaufenden Leimschichten gefertigt. Der Trägerbalken weist einen aus Holz bestehenden zentralen Querschnittsbereich auf. Mehrere metallische Verstärkungsteile sind als U-förmige Spangen ausgebildet, die den Trägerbalken von oben übergreifen. Bodenteile der U-förmigen Spangen werden an der Trägerplatte des Aufbaubodens vorgesehen, so daß die U-förmige Spange und das Bodenteil eine geschlossene Manschette bilden. Das Bodenteil wird dabei seitlich von der U-förmigen Spange begrenzt, so daß sich zwischen der unteren Trägerplatte und dem in aller Regel metallischen Laderaumboden eine vollständige metallische Verbindung ergibt, was insbesondere bei Kühlfahrzeugen nachteilig ist, weil hierdurch Kälte- bzw. Wärmebrücken gebildet werden. Darüber hinaus ist nachteilig, daß die metallische Verstärkung bei dem vorbekannten Fahrzeugaufbau relativ aufwendig baut und eine Anzahl von aufwendigen Fräsarbeiten an dem Trägerbalken erfordert, um insgesamt die metallischen Teile vorsehen zu können.

WO 03/013941 offenbart einen Fahrzeugbau nach dem Oberbegriff des Anspruchs 1.

Es ist Aufgabe der vorliegenden Erfindung, einen Fahrzeugaufbau der eingangs genannten Art zur Verfügung zu stellen, bei der der Aufbauboden sicher mit einem Fahrzeugchassis verbindbar ist, wobei Kälte- bzw. Wärmebrücken zwischen Trägerplatte und Aufbauboden nicht vorliegen. Darüber hinaus soll der Trägerbalken so wenig wie möglich bearbeitet werden müssen.

Zur Lösung dieser Aufgabe zeichnet sich der Fahrzeugaufbau der eingangs genannten Art dadurch aus, daß die metallische Verstärkung des Trägerbalkens eine den Trägerbalken untergreifende, sich parallel zu seiner Längserstreckung ausgerichtete Schraubkonsole sowie eine von der Schraubkonsole untergriffene metallische Verstärkungsplatte aufweist, in die die Schraubelemente für die Verbindung von Fahrzeugchassisteilen mit dem Aufbauboden einschraubbar sind.

Damit ist ein Fahrzeugaufbau zur Verfügung gestellt, bei dem sich die metallische Verstärkung ausschließlich zwischen der Trägerplatte des Aufbaubodens und dem Trägerbalken erstreckt, so daß eine direkte metallische Verbindung zwischen der Trägerplatte und einem Laderaumboden vermieden ist.

Da die Schraubkonsole und die Trägerplatte sich nur im Bereich des Trägerbalkens in seinem unteren Bereich bzw. in Seitenbereichen erstrecken, ist es in aller Regel nur erforderlich, daß ein Trägerbalken von unten mit den entsprechenden Ausnehmungen zum Einsetzen der Schraubkonsole und der metallischen Trägerplatte bearbeitet wird, was in aller Regel ein Fräsen ist. Die Schraubkonsole kann mittels einer Kleberverbindung zunächst mit dem Trägerbalken verbunden werden und ist über Verbindungselemente, z.B. Schrauben, Niete u.dgl. mit diesem zu verbinden.

Eine vormontierte Bodeneinheit kann komplett mit der Trägerplatte, eingebrachten Trägerbalken und montierter Laderaumbodeneinheit, bevorzugtermaßen noch aufgeschäumt in den Räumen zwischen Trägerplatte, Trägerbalken und Laderaumboden eines Schaummaterials (z.b. PUR) auf ein Fahrzeugchassis gelegt werden mit entsprechend vorgebohrten Schraublöchern, wonach über die Schraublöcher die entsprechenden Gewinde in die metallische Verstärkungsplatte eingebracht werden. Danach kann der Fahrzeugaufbau mit dem Chassis verbunden werden. Danach liegt eine dauerhafte Verbindung vor, da diese Verbindung allein durch Stahlteile realisiert werden kann.

Hinsichtlich wesentlicher weiterer Ausgestaltungen wird auf die Ansprüche 2 bis 8 verwiesen, die nachfolgende Beschreibung und die Zeichnung. In der Zeichnung zeigen:
- Fig. 1: eine perspektivische Darstellung ausschnittsweise den Aufbauboden eines Fahrzeugaufbaus mit Trägerplatte und Trägerbalken, wo auf die Darstellung des Laderaumes übersichtlichkeitshalber verzichtet wurde,
- Fig. 2: ein Ausführungsbeispiel einer Anschraubkonsole in Einzeldarstellung,

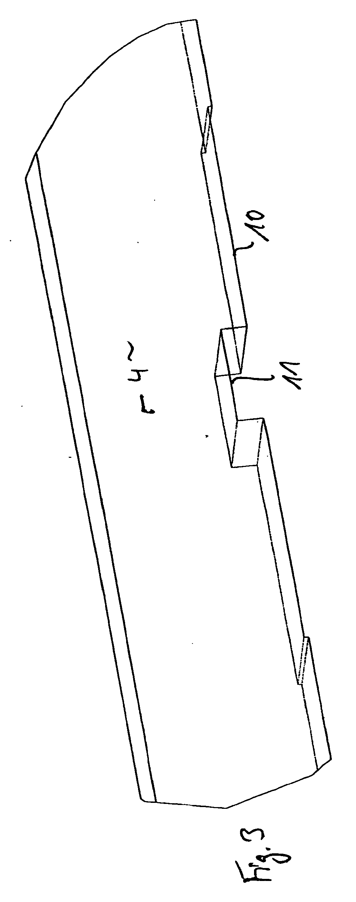

- Fig. 3: ein Ausführungsbeispiel eines (Quer)-Trägerbalkens (ausschnittsweise in einer Perspektivdarstellung), und

- Fig. 4: in einer perspektivischen Darstellung ausschnittsweise einen Trägerbalken mit vorgesehener metallischer Verstärkung.

In der Zeichnung sind grundsätzlich gleichwirkende Teile mit übereinstimmenden Bezugsziffern versehen.

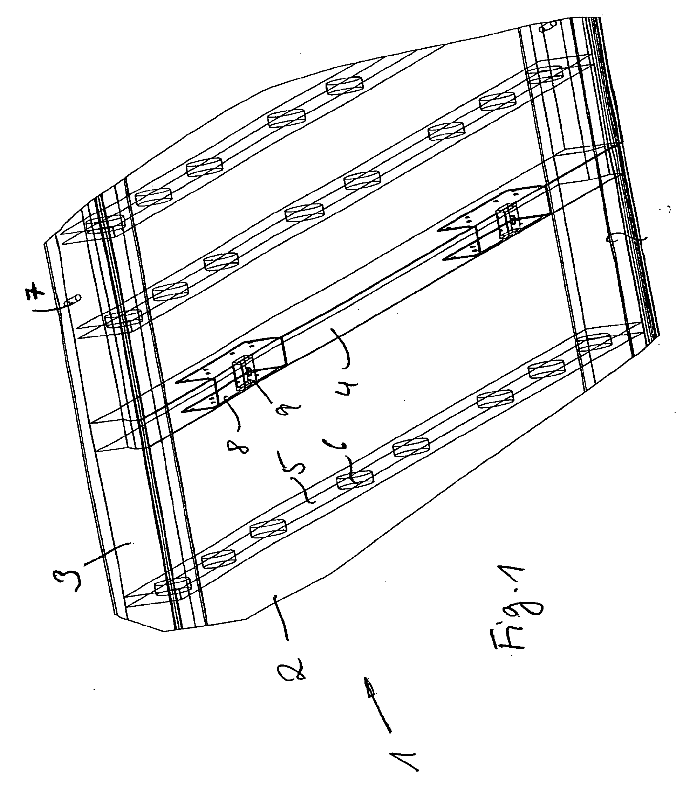

Allgemein mit 1 ist der in Fig. 1 bereichsweise dargestellte Aufbauboden für Fahrzeugaufbau, Kofferbauten u.dgl. für insbesondere Kühlfahrzeuge beziffert. Dieser ist an einem nicht dargestellten Fahrzeugchassis zu befestigen und hat nicht dargestellte Wände und eine Laderaumabdeckung, die der besseren Übersichtlichkeit wegen auch nicht dargestellt ist. Dieser Aufbauboden 1 hat eine Trägerplatte 2, die auf das Chassis aufzulegen ist. Es sind Trägerbalken 4 vorgesehen und zusätzlich zu den Trägerbalken 4 weitere Querträger 5, die Durchtrittsöffnungen 6 haben. In die dazwischen gelegenen Räume ist über Injektoröffnungen 7 ein PUR-Schaummaterial einzubringen, um die so gebildeten Kammern zwischen Trägerplatte 2, der nicht dargestellten Laderaumbodenplatte und den Trägerbalken auszuschäumen, wobei die Durchtrittsöffnungen 6 dafür sorgen, daß der Schaum durch die Querträger 5 hindurchtreten kann, so daß diese ebenfalls durchschäumt sind. Die Trägerbalken 4 haben eine z.B. metallische Verstärkung in Gestalt einer Schraubkonsole 8 und einer Verstärkungsplatte 9.

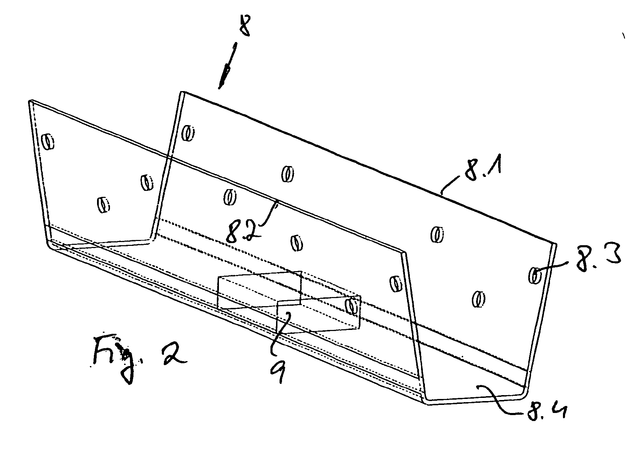

Schraubkonsole 8 und Verstärkungsplatte 9 sind näher in Fig. 2 veranschaulicht. Die Schraubkonsole 8 hat ein im Querschnitt im wesentlichen U-förmiges Querschnittsprofil und kann auch leicht diagonal wegstehende Seitenschenkel 8.1 und 8.2 haben, so daß sich eine leichte trapezförmige Querschnittsgestalt ergibt. Dies ist abhängig von der Geometrie des Trägerbalkens 4. Sie erstreckt sich langgezogen in der Längsausrichtung des Trägerbalkens 4 und weist in ihren seitlichen Schenkeln 8.1 und 8.2 Schraublöcher 8.3 auf, über die die Schraubkonsole 8 mittels Verbindungselementen, z.B. Holzschrauben mit dem Trägerbalken 4 verschraubbar ist. Die quaderförmige Verstärkungsplatte 9 ist in der Innenseite des Querschenkels 8.4 der Schraubkonsole angeheftet und mit dieser verschweißt. Sowohl die Schraubkonsole als auch die Verstärkungsplatte 9 liegen in entsprechenden Ausnehmungen des Trägerbalkens 4, so daß sie dort versenkt angeordnet sind. Diese können z.B. miteinander verklebt sein.

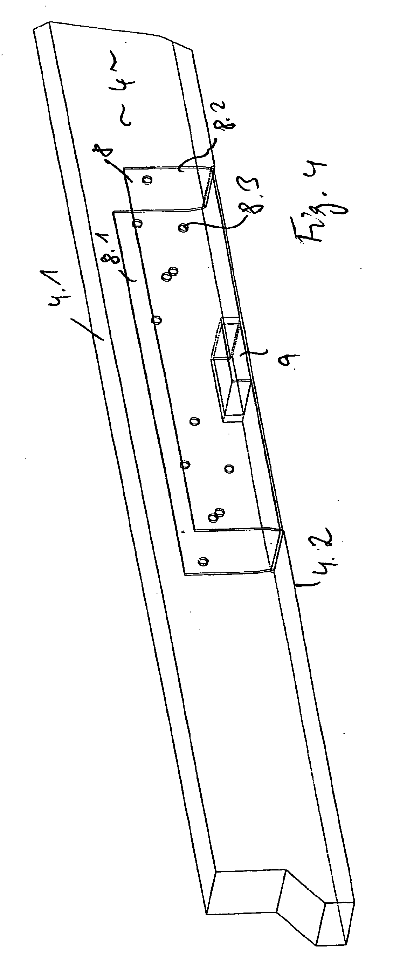

Wie in Fig. 4 näher veranschaulicht, ist im montierten Zustand des Trägerbalkens, der Schraubkonsole 8 und dem Verstärkungsprofil 9 keine metallische Verbindung mehr zu dem auf die obere Stirnkante 4.1 des Trägerbalkens 4 aufzulegenden Laderaumboden vorhanden. Vielmehr kann vor Auflegen der sich unten bei 4.2 des Trägerbalkens anlehnenden Trägerplatte des Aufbaubodens auf das Fahrzeugchassis die Trägerplatte 9 mit einer Gewindebohrung versehen werden, so daß von dort aus die entsprechenden Verbindungsschraubelemente in die Verstärkungsplatte 9 eingeschraubt werden können, wonach eine dauerfeste Verbindung, z.B. Stahlverbindung vorliegt, ohne daß Wärmebrücken erzeugt sind.

## Patentansprüche

1. Fahrzeugaufbau für insbesondere Kühlfahrzeuge, der einen an einem Fahrzeugchassis festlegbaren Aufbauboden aufweist, der eine Trägerplatte (2) und Trägerbalken (4) umfaßt, an denen ein Laderaumboden abstützbar ist, wobei der Trägerbalken (4) in Bereichen, in denen er mit dem Fahrzeugchassis verbunden ist, eine in den Trägerbalken (4) eingelassene Verstärkung, die vorzugsweise metallisch ist, aufweist, **dadurch gekennzeichnet, daß** die Verstärkung des Trägerbalkens (4) eirfe den Trägerbalken (4) untergreifende, sich parallel zu seiner Längserstreckung ausgerichtete Befestigungskonsole (8) sowie eine von der Befestigungskonsole (8) untergriffene Verstärkungsplatte (9) aufweist, an der Verbindungselemente zur Verbindung von Fahrzeugchassisteilen mit dem Aufbauboden festlegbar sind.

2. Fahrzeugaufbau nach Anspruch 1, **dadurch gekennzeichnet, daß** die Befestigungskonsole (8) eine im wesentlichen U-förmige oder trapezförmige Querschnittsgestalt hat mit aufwärts gerichteten Seitenschenkel (8.1,8.2), welche mit dem Trägerbalken (4) verschraubbar sind.

3. Fahrzeugaufbau nach Anspruch 2, **dadurch gekennzeichnet, daß** die Seitenschenkel (8.1,8.2) der Befestigungskonsole (8) über Befestigungsmittel mit dem Trägerbalken (4) verschraubbar sind.

4. Fahrzeugaufbau nach einem der Ansprüche 1 bis 3, **dadurch gekennzeichnet, daß** der Trägerbalken (4) eine Ausnehmung (10) für den Querschenkel (8.4) der Befestigungskonsole (8) sowie eine von dieser ausgehenden zweiten Ausnehmung (11) zur Anordnung der metallischen Verstärkungsplatte (9) aufweist.

5. Fahrzeugaufbau nach einem der Ansprüche 1 bis 4, **dadurch gekennzeichnet, daß** die Verstärkungsplatte (9) an der Befestigungskonsole (8) angeheftet oder mit dieser verschweißt ist.

6. Fahrzeugaufbau nach einem der Ansprüche 1 bis 5, **dadurch gekennzeichnet, daß** zwischen dem Trägerbalken (4) und der Befestigungskonsole (8) eine Kleberschicht vorgesehen ist.

7. Fahrzeugaufbau nach einem der Ansprüche 1 bis 6, **dadurch gekennzeichnet, daß** Trägerbalken (4) mit der Trägerplatte (2) des Aufbaubodens verklebt ist.

8. Fahrzeugaufbau nach einem der Ansprüche 1 bis 7, **dadurch gekennzeichnet, daß** zwischen dem Trägerbalken (4), dem Laderaumboden und der Trägerplatte (2) ein aufschäumbares und aushärtbares Polyurethanmaterial vorgesehen ist.

9. Fahrzeugaufbau nach einem der Ansprüche 1 bis 8, **dadurch gekennzeichnet, daß** die Befestigungskonsole (8) als Schraubkonsole ausgebildet ist.

## Claims

1. Vehicle body, in particular for refrigerated vehicles, which has a floor which is able to be fixed to a chassis of the vehicle and which comprises a supporting plate (2) and supporting beams (4) on which the floor of a load-carrying space can be supported, the supporting beam (4) having, in regions in which it is connected to the chassis of the vehicle, a reinforcement which is preferably metallic and which is inserted into the supporting beam (4), **characterised in that** the reinforcement of the supporting beam (4) has a fastening bracket (8) which fits under the supporting beam (4) and which is aligned parallel to the longitudinal extent thereof, and a reinforcing plate (9) under which the fastening bracket (8) fits and to which connecting members for connecting parts of the chassis of the vehicle to the floor of the body can be fixed.

2. Vehicle body according to claim 1, **characterised in that** the fastening bracket (8) is of a substantially U-shaped or trapezoidal configuration in cross-section, having upwardly directly side-arms (8.1, 8.2) which can be screwed or bolted to the supporting beam (4).

3. Vehicle body according to claim 2, **characterised in that** the side arms (8.1, 8.2) of the fastening bracket (8) can be screwed or bolted to the supporting beam (4) by means of fastening means.

4. Vehicle body according to one of claims 1 to 3, **characterised in that** the supporting beam (4) has a recess (10) for the transverse portion (8.4) of the fastening bracket (8), and a second recess (11), extending therefrom, for the metallic reinforcing plate (9) to be arranged in.

5. Vehicle body according to one of claims 1 to 4, **characterised in that** the reinforcing plate (9) is attached to the fastening bracket (8) or welded thereto.

6. Vehicle body according to one of claims 1 to 5, **characterised in that** a layer of adhesive is provided between the supporting beam (4) and the fastening bracket (8).

7. Vehicle body according to one of claims 1 to 6, **characterised in that** the supporting beam (4) is adhesive-bonded to the supporting plate (2) of the floor of the body.

8. Vehicle body according to one of claims 1 to 7, **characterised in that** a polyurethane material which can be foamed and cured is provided between the supporting beam (4), the floor of the load-carrying space and the supporting plate (2).

9. Vehicle body according to one of claims 1 to 8, **characterised in that** the fastening bracket (8) takes the form of a screwed or bolted bracket.

## Revendications

1. Construction automobile en particulier pour véhicules réfrigérants, qui présente un fond de construction pouvant être fixé sur un châssis de véhicule et comporte une plaque de support (2) et une barre de support (4), contre lesquelles peut être appuyé un fond de compartiment à marchandises, la barre de support (4) présentant dans des zones, dans lesquelles elle est reliée au châssis de véhicule, un renforcement de préférence métallique, encastré dans la barre de support (4), **caractérisée en ce que** le renforcement de la barre de support (4) présente une console de fixation (8) venant en prise sous la barre de support (4), orientée parallèlement à son développement longitudinal, ainsi qu'une plaque de renforcement (9), sous laquelle vient en prise la console de fixation (8) et sur laquelle peuvent être fixés des éléments de liaison pour la liaison de parties de châssis de véhicule au fond de la construction.

2. Construction automobile selon la revendication 1, **caractérisée en ce que** la section de la console de fixation (8) présente une forme sensiblement en U ou trapézoïdale avec des branches latérales (8.1, 8.2) dirigées vers le haut et pouvant être vissées à la barre de support (4).

3. Construction automobile selon la revendication 2, **caractérisée en ce que** les branches latérales (8.1, 8.2) de la console de fixation (8) peuvent être vissées par le biais de moyens de fixation à la barre de support (4).

4. Construction automobile selon l'une quelconque des revendications 1 à 3, **caractérisée en ce que** la barre de support (4) présente un évidement (10) pour la branche latérale (8.4) de la console de fixation (8) ainsi qu'un second évidement (11) partant de celui-ci pour l'agencement de la plaque de renforcement métallique (9).

5. Construction automobile selon l'une quelconque des revendications 1 à 4, **caractérisée en ce que** la plaque de renforcement (9) est attachée à la console de fixation (8) ou est soudée à celle-ci.

6. Construction automobile selon l'une quelconque des revendications 1 à 5, **caractérisée en ce qu'**une couche de colle est prévue entre la barre de support (4) et la console de fixation (8).

7. Construction automobile selon l'une quelconque des revendications 1 à 6, **caractérisée en ce que** la barre de support (4) est collée à la plaque de support (2) du fond de construction.

8. Construction automobile selon l'une quelconque des revendications 1 à 7, **caractérisée en ce qu'**un matériau en polyuréthane pouvant mousser et durcir est prévu entre la barre de support (4), le fond du compartiment à marchandises et la plaque de support (2).

9. Construction automobile selon l'une quelconque des revendications 1 à 8, **caractérisée en ce que** la console de fixation (8) est réalisée comme une console à visser.
